# EUROPEAN PATENT SPECIFICATION

(11) **EP 2 883 818 B1**
(45) Date of publication and mention of the grant of the patent: **17.08.2016**
(21) Application number: 14190992.9
(22) Date of filing: 30.10.2014
(51) Int. Cl.: B65G 29/00, B65G 47/14, B65G 47/256

(54) **System and method for orienting objects**
System und Verfahren zum Ausrichten von Objekten
Système et procédé pour l'orientation d'objets

(30) Priority: 12.12.2013 IT MI20132070
(43) Date of publication of application: 17.06.2015
(73) Proprietor: BONINO S.p.A. con unico azionista, 15121 Alessandria (IT)
(72) Inventor: Bonino, Alessandro, I-15121 Alessandria (IT); Gasparini, Enrico Maria, I-15121 Alessandria (IT)
(74) Representative: Leihkauf, Steffen Falk

(56) References cited:
- EP-A1- 1 281 643
- EP-A1- 2 404 849
- CH-A- 543 343

## Description

### DESCRIPTION

The present invention generally refers to systems and methods for arranging a plurality of objects having a shape in sequence with a predetermined orientation, to the purpose of a controlled supply of such objects to subsequent processing steps. Particularly, the invention relates to a device for orienting objects according to the preamble of claim 1 and a method for orienting objects according to the preamble of claim 15, as disclosed in EP 1 281 643 A1.

A typical example of use of the above-mentioned system is the orientation of plugs or closing members that are intended to be automatically secured to beverage containers. In such a case, in order to be able to be properly gripped by robotized gripping member, all the closing members have to be unmistakably of the same predetermined tridimensional orientation.

Referring by way of example to a cylindrical plug with an open lower side, a closed upper side, and an asymmetric radial projection, such predetermined orientation can be obtained by a first top-bottom orientation (which faces the open side of the plug downwardly) and a second orientation rotating about a vertical axis (which aligns the radial projection in a predetermined direction).

From the Italian patent IT1356060, a rotary orienting machine is known, in which the objects to be oriented are fed in bulk, particularly plugs, and which provides for singularizing and orienting the objects by a first step of selection of the objects having a proper top-bottom orientation and a successive second step of angular orientation by rotation of the previously selected objects.

Such known orienting machine comprises:
- an inclined rotating plate forming, along the outer circumference thereof, a sequence of alveoli, each being suitable to receive a single object with the proper top-bottom orientation,
- a stationary side wall, extending along the outer circumference of the rotating plate so as to define, together with rotating plate, a collection space to collect the bulk objects to be oriented and an orienting path,
- wherein the rotating plate is rotatable by a motor in order to feed the objects from the collection space into the alveoli, and to move the alveoli along the orienting path,
- selection means configured to prevent the objects with an improper top-bottom orientation from being received in the alveoli, or to eject objects having an improper top-bottom orientation from the alveoli, in a selection length of the orienting path,
- a stationary brush associated to the side wall and projecting in the orienting path in an orientation length downstream of the selection length, so as to engage the objects received in the alveoli and to rotate them about a vertical rotational axis,
- an abutment surface extending along the orientation length and forming an end-of-rotation abutment for the objects which reached a proper angular orientation.

With reference to the orientation of plugs, the selection means can comprise an alveolus shape, which makes receiving a plug with a wrong top-bottom orientation impossible, or a pneumatic blower directing an air jet from the bottom up in the alveolus so as to eject the plugs having the concave side facing downwardly, and to suction (by the Venturi effect) the plugs having the closed convex side downwardly.

The known orienting machine is very satisfactory from the precision and reliability of orientation viewpoint. However, the need is felt to increase the orientation speed (meant as the number of oriented pieces per minute), which is to date insufficient.

The reasons which to date prevent higher orientation speeds from being reached are multiple.

From an analysis carried out by the inventors, it emerges that in the collection space not all the alveoli are reached by an object, with the result that already at the beginning of the orienting path a predetermined number of alveoli remains empty. Furthermore, along the selection length all the objects with an improper top-bottom orientation are ejected from the alveoli, typically emptying about a half of the alveoli. Consequently, the objects actually subjected to an angular orientation and at the machine outlet come in a row with large, unused empty spaces. An increase in the machine yield can be achieved only by increasing the machine rotation rate or the machine dimension. However, beyond a predetermined rate limit, the objects do not naturally fill in the alveoli, and almost all of which would remain empty. Furthermore, as the overall dimensions of an orienting machine increase, meeting the stringent tolerance limits becomes more and more difficult, with adversely affects the orientation precision.

Therefore, the object of the present invention is to provide a device and a method of orientation of objects, having such characteristics as to increase the orientation speed.

A further object of the invention is to propose an orienting device which is structurally optimized and simplified, such as to make the orientation process less sensitive to imperfections and to allow a speed increase of the mechanical components of the device.

These and other objects are achieved by an object orienting device according to claim 1, and by an object orienting method according to claim 14.

The dependent claims relate to advantageous embodiments.

According to an aspect of the invention, an object orienting device comprises:
- a support surface (3) movable along a selection path (4) and suitable to receive the objects having a proper top-bottom orientation,
- a feeder (6) to convey/feed the objects (5) onto the support surface (3) at a starting point (7) of the selection path (4),
- selection means configured to prevent the objects with an improper top-bottom orientation from being received onto the support surface, or to eject the objects with an improper top-bottom orientation from the support surface, so as to obtain, at an output point (10) of the selection path (4) a sequence only of objects (5) having said proper top-bottom orientation,
- a build-up channel having an input opening connected to the output point of the selection path, an output opening, and a guide surface system extending from the input opening up to the output opening so as to receive the objects with the proper top-bottom orientation in the input opening and to guide all the received objects in a single row and with a same top-bottom orientation (but not necessarily constant) from the input opening to the output opening,
- conveyor means conveying each single object in the build-up channel towards the output opening so as to form at the output opening a single row of objects brought mutually close (preferably in a pressing contact) and having all a same top-bottom orientation,
- a sequence of alveoli movable along an orienting path extending from a receiving point connected to the output opening of the build-up channel up to a release point, so that the build-up channel feeds in each of the alveoli a single object with the proper top-bottom orientation and the alveoli transport all the received objects with a same (but not necessarily constant) top-bottom orientation from the receiving point to the release point,
- a friction surface projecting in the orienting path so as to engage the objects received in the alveoli and, due to the relative movement between the alveoli and said friction surface, to rotate the objects about a reference axis thereof,
- an abutment surface extending along an alignment length of the orienting path and forming an end-of-rotation abutment for the objects that reached a proper angular orientation.

By virtue of the subdivision of the object orientation in independent top-bottom orientation and angular orientation steps, the moving rates along the selection path and along the orienting path are not mutually constrained anymore and can be optimized for the single operation. Furthermore, the single orientation operations are less complex, hence they can be optimized and made quicker. The single selecting and orienting paths are much shorter than the overall orienting path of the prior art, allowing the use of smaller and/or quicker machines.

However, the more relevant advantage is that the build-up channel which is interposed between the selection path and the orienting path obviates the occurrence of empty alveoli. In fact, by virtue of the build-up of the row of objects, the orientation yield does not depend anymore on the causality of insertion into the alveoli and the top-bottom orientation of the objects.

Since the provision of the oriented objects and the orientation process itself can be carried out also with alignment and rotation axes which are inclined to the vertical, the above-mentioned concept of top-bottom orientation and of angular orientation can be generalized as follows:

The object has a reference side (for example, the closed side of a plug) and a reference axis (for example, a longitudinal axis of an approximately cylindrical or frusto-conical plug with a side projection), and the first orientation is the orientation of the reference side of the object in a first predetermined direction (for example, upwardly, downwardly, radially outwardly or radially inwardly with reference to a rotation axis of circular selection path), while the second orientation is a rotation angle of the object about the reference axis with respect to a second predetermined direction (for example, an orientation of the side projection in a direction tangent to the orienting path).

In accordance with an embodiment, the friction surface is mobile at a controlled speed along the orienting path so as to control the rotation rate of the objects about their reference axis independently from the moving speed of the alveoli along the orienting path. Particularly, the friction surface is mobile in a direction opposite the movement direction of the alveoli, so as to increase the rotation angle of the objects while keeping the orienting path length constant.

This further increases the orientation speed, while keeping the machine dimension and the moving rate of the same objects constant.

Alternatively, the friction surface can be mobile in the movement direction of the alveoli, so as to decrease the rotation angle of the objects, while keeping the orienting path length constant, avoiding, for example possible relative slidings between the friction surface and the object.

In accordance with an aspect of the invention, the friction surface is formed in a belt which is extending and movable along a rotation length of the orienting path and connected with actuator belt means for a controlled handling of the belt along such rotation length.

In accordance with a further aspect of the invention, the build-up channel comprises a too empty detector (or, in other words: a "non sufficiently filled" detector) configured to emit a too empty signal when the length of the row of objects brought close to each other (in mutual contact) at the output opening is less than a lower limit length. A control unit of the device controls the moving rate of the support surface along the selection path and/or the moving rate of the alveoli along the orienting path also as a function of the too empty signal.

This allows controlling in a targeted manner the filling rate of the build-up channel to further decrease the risk of empty alveoli.

In accordance with a further aspect of the invention, the build-up channel comprises an overfill detector configured to emit a overfill signal when the length of the row of objects brought close to each other (in mutual contact) at the output opening is larger than an upper limit length. The control unit of the device controls the moving rate of the support surface along the selection path and/or the moving rate of the alveoli along the orienting path also as a function of the overfill signal.

This allows excluding operation anomalies due to an excessive filling of the build-up channel with a sticking risk for the objects.

In order to better understand the invention and appreciate the advantages thereof, some embodiments thereof will be described herein below by way of nonlimiting example, with reference to the annexed figures, in which:

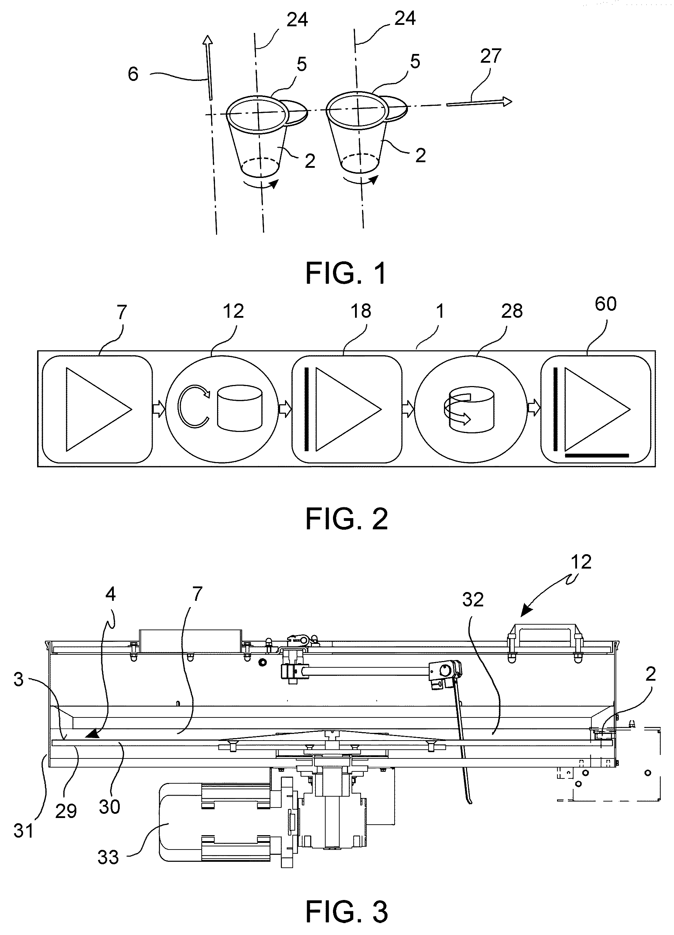

Fig. 1 is a schematized illustration of a row of objects having a first orientation and a second orientation,
Fig. 2 is a schematized illustration of the object orienting method and corresponding functional units of the orienting device according to an embodiment of the invention;
Fig. 3 is a sectional view of a single rotating disc selection device for a first orientation of the objects, for example, a top-bottom orientation, in accordance with an embodiment;
Fig. 4 is a perspective view (with the upper lid being removed) of the selection device in Fig. 3;
Fig. 5 is an enlarged view of a detail in Fig. 3;

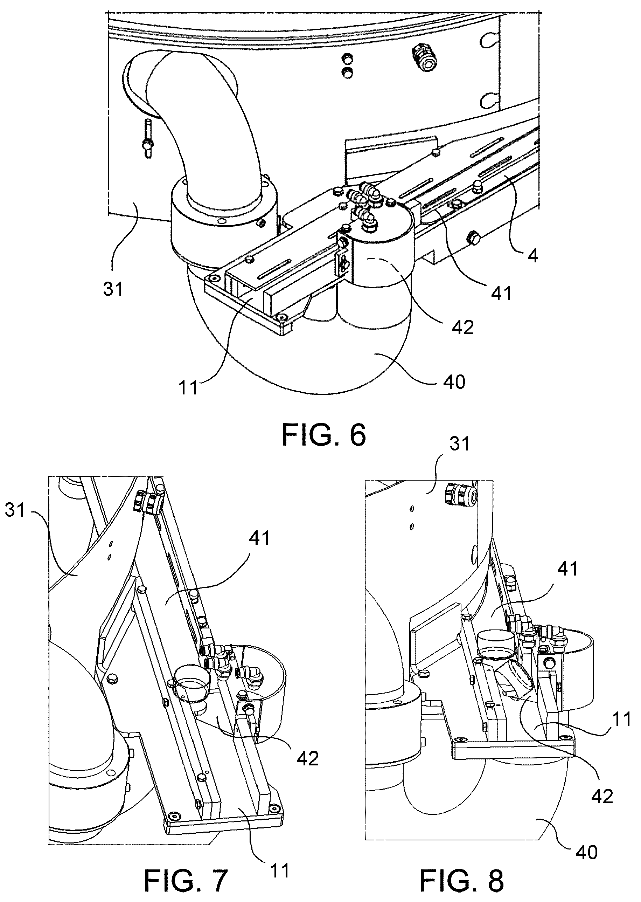

Fig. 6 is an enlarged view of a detail in Fig. 4;
Figs. 7 and 8 illustrate a step of selecting properly positioned (Fig. 7) and improperly positioned objects (plugs) (Fig. 8) in a withdrawal path from the selection device in Fig. 3;
Fig. 9 is a perspective view of a double rotating disc selection device with selection alveoli according to an embodiment;
Fig. 10 is a perspective view of a detail of the device in Fig. 9;

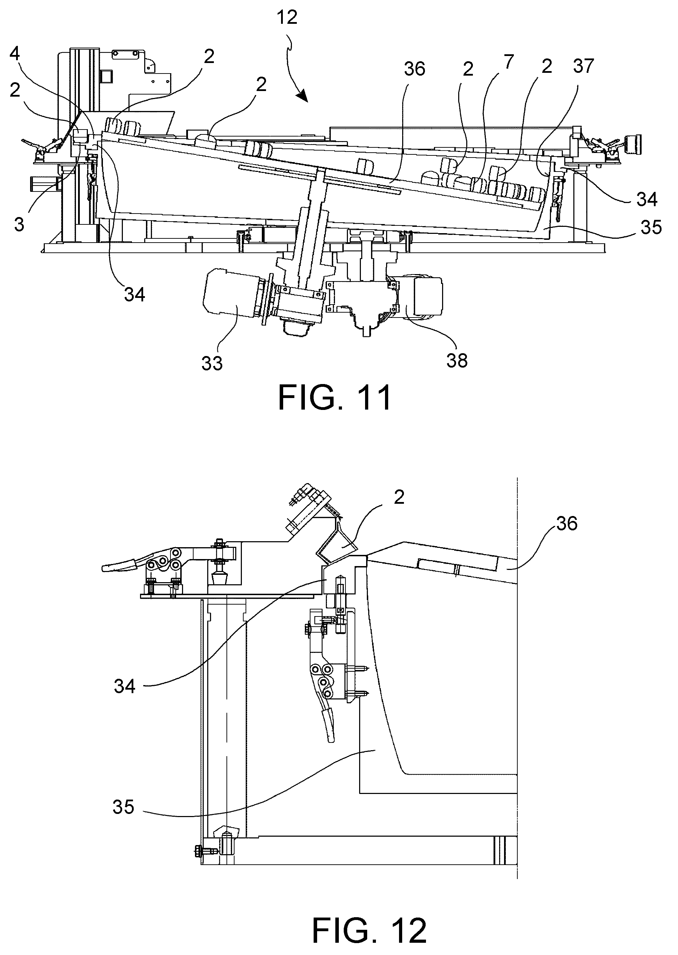

Fig. 11 is a vertical sectional view of the selection device in Fig. 9;
Fig. 12 is a sectional view of a detail of the selection device according to an embodiment;
Figs. 13 and 14 are perspective views of a selection device with inclined rotating plate with selection alveoli according to an embodiment;

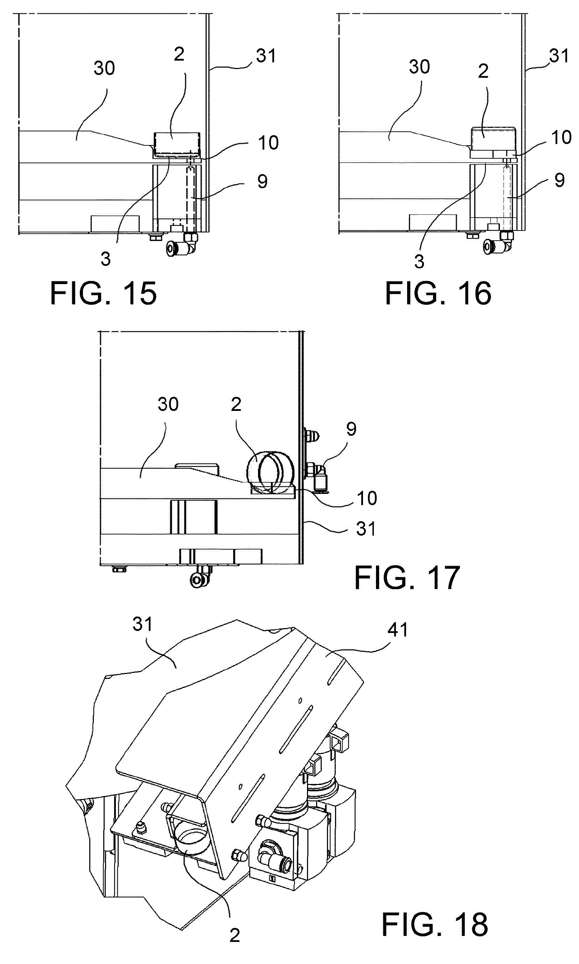

Figs. 15 and 16 illustrate a selection step by blowing with Venturi effect, which suctions properly positioned objects (Fig. 15) and with a pushing effect, which ejects improperly positioned objects (Fig. 16);
Fig. 17 illustrates an object which is improperly positioned in a selection alveolus;
Fig. 18 is an enlarged view of a detail of the selection device in Fig. 14;
Fig. 19 is a sectional view of a selection device according to a further alternative embodiment;
Fig. 20 is a schematized perspective view of a selection and orientation system with the selection device, of a build-up channel to build-up a row of preoriented objects, for example top-bottom, and an orienting device for a second orientation of the objects, for example, an angular orientation, in accordance with an embodiment;
Fig. 21 is a top view of the system in Fig. 20;

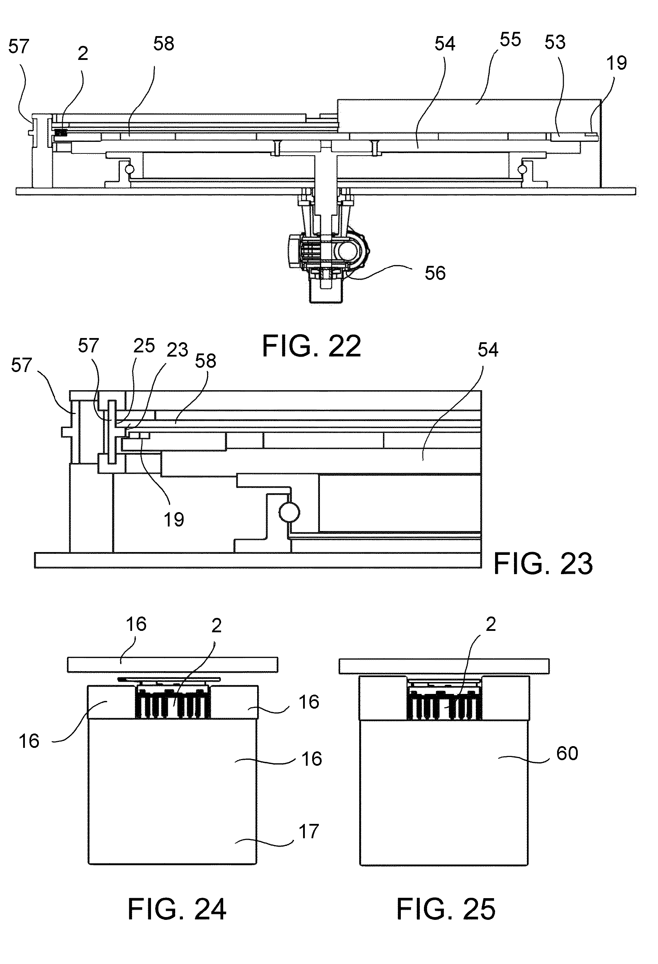

The Fig. 22 is a cross-sectional view of the orienting device in Fig. 20.
The Fig. 23 is an enlarged view of a detail in Fig. 22.
The Fig. 24 is a cross-sectional view of the build-up channel according to an embodiment;
The Fig. 25 is a cross-sectional view of a discharge channel of the fully oriented objects.

### General description of the orienting device and method

With reference to the figures, a device 1 for orienting objects 2 comprises:
- a support surface 3 movable along at least one length of a selection path 4 and suitable to receive the objects 2 having a first orientation, wherein a reference side 5 of the object 2 faces a predetermined reference direction 6 (for example, a top-bottom orientation),
- a feeder 7 to convey/feed the objects 2 onto the support surface 3 at a starting point 8 of the selection path 4,
- selection means 9, 10 configured to prevent the objects 2 with an orientation that is different from the first orientation from being received onto the support surface 3, or to eject the objects 2 with an orientation that is different from the first orientation from the support surface 3, so as to obtain, at an output point 11 of the selection path 4, a sequence only of objects 2 having said first orientation.

Therefore, the support surface 3, the feeder 7, and the selection means 9,10 are part of a selection assembly or device 12 which, starting from bulk and randomly oriented objects 2, provides for arranging a sequence of objects 2 all having the same first orientation, for example a predetermined top-bottom orientation.

The orienting device 1 further comprises:
- a build-up channel 13 having an input opening 14 connected to the output point 11 of the selection path 4, an output opening 15, and a guide surface system 16 extending from the input opening 14 up to the output opening 15 so as to receive the objects 2 with the first orientation in the input opening 14 and to guide all the objects 2 received in a single row and with a same (but not necessarily constant) first orientation from the input opening 14 to the output opening 15,
- conveyor means 17 conveying each single object 2 in the build-up channel 13 towards the output opening 15 so as to form at the output opening 15 a single row of objects 2 brought mutually close (preferably in pressing contact) and having all a same first orientation.

In the present description, the term "convey" means both "to thrust" or "to move" in an active manner, e.g., by means of a transport by air, conveyor belt, or vibration, and "to guide" or "to accompany" in a passive manner, e.g., by means of build-up coils or guides for sliding or falling by gravity of the objects.

Therefore, the build-up channel 13 and the conveyor means 17 are part of a build-up assembly or device 18 which, starting from a sequence of objects 2 having a same first orientation, but a number of empty spaces, provides for arranging a single row of objects 2 brought mutually close (preferably in pressing contact) and having all a same first orientation.

The orienting device 1 further comprises:
- a sequence of alveoli 19 movable along an orienting path 20 extending from a receiving point 21 connected to the output opening 15 of the build-up channel 13 up to a release point 22, so that the build-up channel 13 feeds into each of the alveoli 19 a single object 2 with the first orientation and the alveoli 2 transport all the objects 2 received with the same (but not necessarily constant) first orientation from the receiving point 21 to the release point 22,
- a friction or engage surface 23 projecting in the orienting path 20 so as to engage the objects 2 received in the alveoli 19 and, due to the relative movement between the alveoli 19 and the friction surface 23, to rotate the objects 2 about a reference axis thereof 24,
- an abutment surface 25 extending along an alignment length 26 of the orienting path 20 and forming an end-of-rotation abutment for the objects 2 that reached a second orientation, in which the object 2 is rotated about the reference axis 24 by a predetermined angle with respect to a second reference direction 27 predetermined (for example, a radial orientation or alignment).

Therefore, the sequence of alveoli 19, the friction surface 23, and the abutment surface 25 are part of an angular orientation assembly or device 28 which, starting from a single row of objects 2 brought mutually close (preferably in pressing contact) and having all a same first orientation, provides for arranging a row of objects 2 brought close to each other and having all a same first orientation and a same second orientation.

By virtue of the subdivision of the orientation of the objects 2 in independent steps of orientation (for example, top-bottom and angular), the moving rates along the selection path 4 and along the orienting path 20 are not mutually constrained anymore and can be optimized for the single operation. Furthermore, the single orientation operations are less complex, hence they can be optimized and made quicker. The single selecting 4 and orienting 20 paths are much shorter than the overall orienting path of the prior art, allowing the use of smaller and/or quicker machines

However, the more relevant advantage is that the build-up channel 13 which is interposed between the selection path 4 and the orienting path 20 obviates the occurrence of empty alveoli 19. In fact, by virtue of the build-up of the row of objects 2, the orientation yield does not depend anymore on the causality of insertion into the alveoli and the first (top-bottom) orientation of the objects 2

### Description of embodiments of the selection assembly

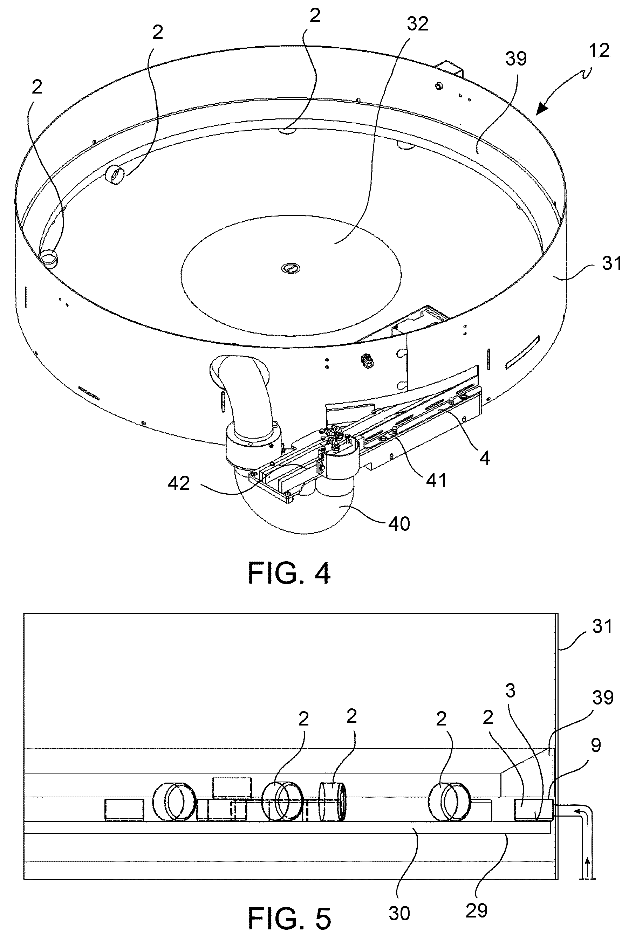

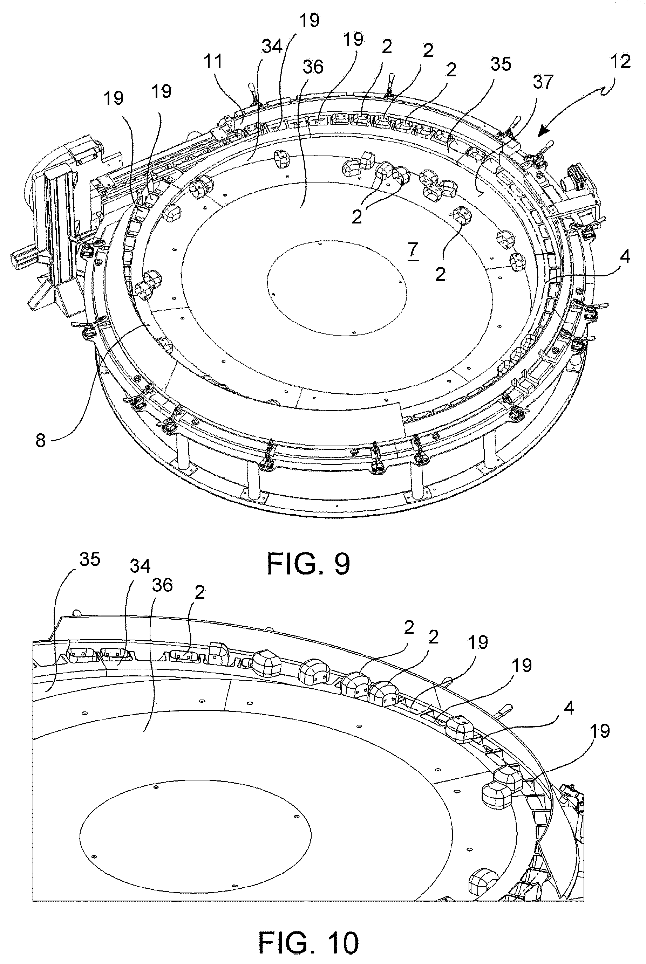

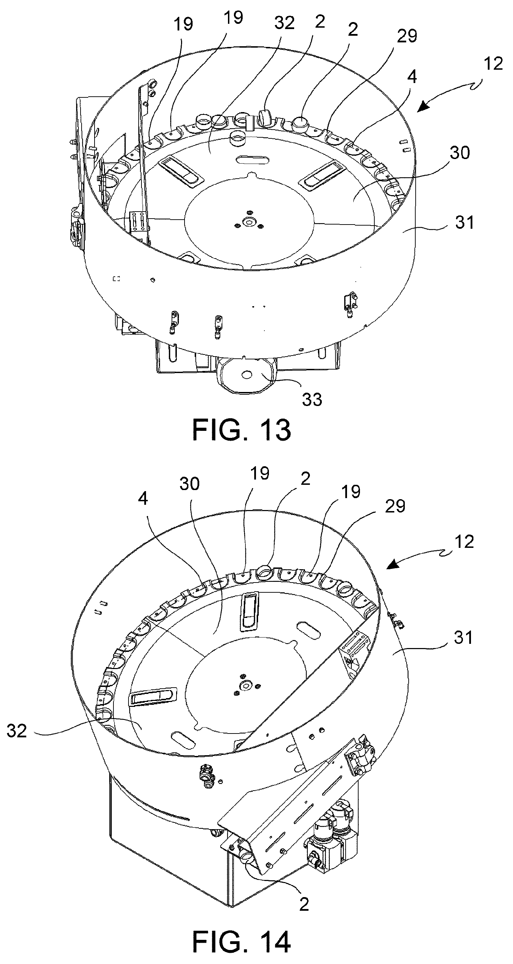

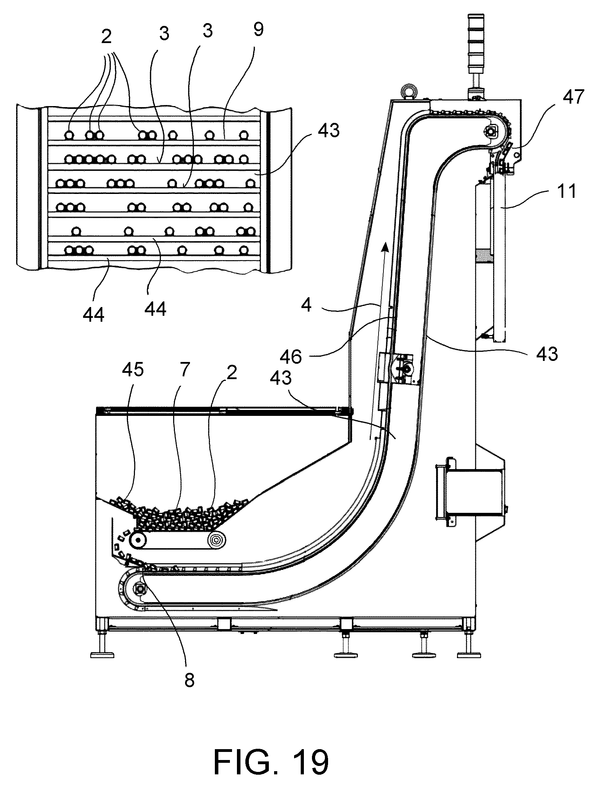

In accordance with embodiments, the selection assembly 12 can be configured as a rotary machine with a single rotating disc (Fig. 14), a rotary machine with double rotating disc (Fig. 9), a centrifugal rotary machine (Fig. 4) or a gravitational selection machine (Fig. 19).

### Rotary machine with single rotating disc

In an embodiment (Fig. 14), the support surface 3 is formed in a support ring 29 extending along an outer circumference of (and integral with) a rotating plate 30. A side wall 31, circumferentially extending substantially along the entire selection path 4, defines the selection path 4 on a radially outer side thereof and, together with the rotating plate 30, a collection space 32 to collect the bulk objects 2 to be oriented. The rotating plate 30 is inclined and rotatable by a motor 33 in order to feed the objects 2 from the collection space 32 onto the support surface 3 and to move the support surface 3 along the selection path 4.

### Rotary machine with double rotating disc

In the embodiment shown in Fig. 9 (system with a double rotating disc), the support surface 3 is formed in a support ring 34 of an outer rotating housing 35, which support ring 34 extends along an outer circumference of an inner rotating plate 36. A side wall 31 extends circumferentially substantially along the entire selection path 4 and defines the selection path 4 on a radially outer side thereof. The support ring 34 of the outer rotating housing 35 forms a radially inner surface 37 defining, together with inner rotating plate 36, a collection space 32 to collect the bulk objects 2 to be oriented. The inner rotating plate 36 is inclined and rotatable by a first motor 33 to feed the objects 2 from the collection space 32 onto the support surface 3 of the support ring 34, and the outer rotating housing 35 is rotatable by a second motor 38 to move the support surface 3 along the selection path 4.

### Centrifugal rotary machine

In an embodiment (Fig. 4), the support surface 3 is formed in a support ring 29 extending along an outer circumference of (and integral with) a rotating plate 30. A side wall 31, circumferentially extending substantially along the entire selection path 4, defines the selection path 4 on a radially outer side thereof and, together with the rotating plate 30, a collection space 32 to collect the bulk objects 2 to be oriented. The rotating plate 30 lies in a substantially horizontal plane and is rotatable by a motor 33 in order to feed the objects 2 from the collection space 32 (by means of the centrifugal force) onto the support surface 3 and to move the support surface 3 along the selection path 4.

In all the contemplated types of rotary machines, the selection path 4 can be extending out of the machine itself, and, thus not necessarily limited only to the support ring 29 or only the support ring 34. According to the embodiment, the selection means 9, 10 can act on the circumferential length and/or on the outer length of the selection path 4.

### Gravitational selection machine

- In an embodiment (Fig. 19), the support surface 3 is formed by a conveyor belt 43 with a plurality of shovels 44 arranged transversal to a longitudinal extension of the conveyor belt 43 itself. The conveyor belt 43 receives the bulk objects 2 from a hopper 45 and forms an ascending length 46 suitable to select the objects 2 having the first orientation, so that, at the end of the ascending length 46 only the objects 2 having such first orientation are present on the conveyor belt 43. A withdrawing device 47, arranged downstream of the ascending length 46 of the conveyor belt 43, is configured to withdraw the objects 2 with the first orientation from the conveyor belt 43. To this aim, the withdrawing device 47 can comprise a casing 48 with a first wall and a second wall, which is opposite and faces the first wall, defining an interspace therebetween, which maintains the first orientation of the objects 2 while they move (for example, fall due to the action of the force of gravity) towards the output point 11 of the selection path 4. In this case also, the selection path 4 extends out of its position as defined by the conveyor belt 43.

### Description of embodiments of the selection means

In accordance with embodiments, the selection means 9, 10 can comprise a sequence of selection seats 9 formed in the support surface 3 and each being so shaped as to receive only one of the objects 2 with the first orientation and to prevent the objects 2 with an orientation that is different from the first orientation from being received. To this aim, the selection seats 9 can cooperate with a side wall 31 extending along the selection path 4 and a shaving surface 39 opposite the support surface 3.

Alternatively, the selection means 9, 10 can comprise a continuous channel that is formed by the support surface 3, a side wall 31, and a shaving surface 39 opposite the support surface 3, wherein the continuous channel is so shaped as to receive only the objects 2 with the first orientation and to prevent the objects 2 with an orientation that is different from the first orientation from being received.

Alternatively or in addition, the selection means 9, 10 can comprise an ejector 10, for example, a pneumatic blower directing an air jet to the electromechanical or mechanical selection path (for example, into the selection seats 9 or in the selection path), which displaces a small piston in the selection path (for example, into the selection seats 9 or in the selection path), configured to eject the objects 2 with an orientation that is different from the first orientation from the selection path 4 and which preferably makes the ejected objects 2 to go back into the feeder, i.e., in the collection space 32.

Alternatively or in addition, the selection means 9, 10 can comprise a mechanical deflector, for example, a discontinuous support system 42, configured to unbalance and move the objects 2 with an orientation that is different from the first orientation from the selection path 4 and which preferably makes the ejected objects 2 to go back into the feeder, i.e., in the collection space 32.

For the return of the objects 2 into the feeder 7, a return channel 40 can be provided, with associated pneumatic blower, particularly in the case that the ejection of the objects 2 occurs in an end length 41 of the selection path 4 extending out of the rotary machine.

### Description of embodiments of the build-up channel

In accordance with an embodiment, the build-up channel 13 comprises a too empty detector 48 configured to generate and emit a too empty signal when the length of the row of objects 2 brought mutually close to each other (in contact) at the output opening 15 is less than a lower limit length. A control unit 49 of the device 1 is in signal connection with the too empty detector 48 and with the actuator motors 33, 38 of the support surface 3 and the alveoli 19 and controls the moving rate of the support surface 3 along the selection path 4 and/or the moving rate of the alveoli 19 along the orienting path 20 also as a function of the too empty signal.

This allows controlling in a targeted manner the filling rate of the build-up channel 13 to further decrease the risk of empty alveoli 19.

According to an embodiment, the too empty detector 48 comprises an optical sensor, for example, a video camera or a photocell, which is configured to detect the passage of objects 2 in a first detection point 50 in the build-up channel 13 at a distance from the output opening 15 that is equal to the lower limit length, for example, 20 cm upstream of the output opening 15. The control unit 49 is configured to determine, based on the frequency of the passages of detected objects, if the objects 2 are brought close to each other (in contact) along the entire row between the first detection point 50 and the output opening 15 or if such row comprises undesired empty spaces.

In accordance with a further embodiment, the build-up channel 13 comprises an overfill detector 51 configured to generate and emit a overfill signal when the length of the row of objects 2 brought close to each other (in mutual contact) at the output opening 15 is larger than an upper limit length. The control unit 49 of the device 1 is in signal connection with the overfill detector 51 and with the actuator motors 33, 38 of the support surface 3 and of the alveoli 19 and controls the moving rate of the support surface 3 along the selection path 4 and/or the moving rate of the alveoli 19 along the orienting path 20 also as a function of the overfill signal.

This allows preventing operation anomalies due to an excessive filling of the build-up channel 13 with a sticking risk for the objects 2.

According to an embodiment, the overfill detector 51 comprises an optical sensor, for example, a video camera or a photocell, which is configured to detect the passage of objects 2 in a second detection point 52 in the build-up channel 13 at a distance from the output opening 15 that is equal to the upper limit length, for example, 30 cm downstream of the input opening 14 and/or 80 cm upstream of the output opening 15. The control unit 49 is configured to determine, based on the frequency of the passages of detected objects, if the objects 2 are brought mutually close (in contact) along the entire row between the second detection point 52 and the output opening 15 or if such row still comprises empty spaces, hence further receiving capacity.

In accordance with an embodiment, the conveyor means 17 can comprise:
- one or more air blowers arranged to direct one or more air jets in the build-up channel 13 in the direction of the output opening 15 and/or
- one or more conveyor belts or conveying brushes forming a conveying surface in contact with the objects 2 and movable in the direction of the output opening 15 and/or
- a gravitational conveyor formed by the guide surface system 16 that are inclined so that the objects 2 fall due to the action of the force of gravity towards the output opening 15.

### Description of embodiments of the angular orientation assembly

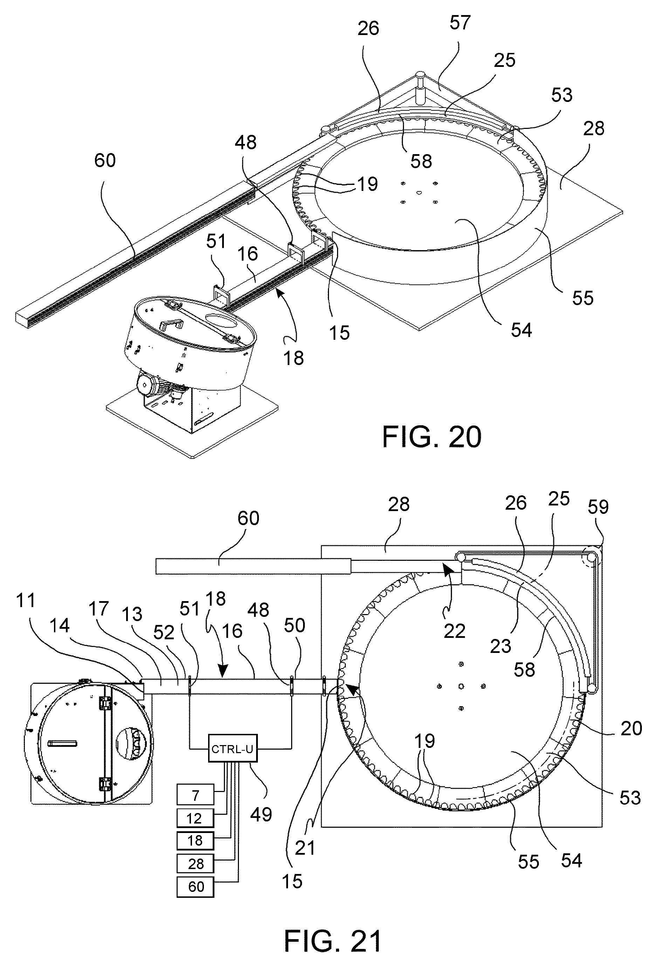

In accordance with an embodiment (Fig. 20), the alveoli 19 are formed in a peripheral ring 53 extending along an outer circumference of (and integral with) a rotating plate 54. A peripheral wall 55 extends circumferentially substantially along the entire orienting path 20 and defines the orienting path 20 on a radially outer side thereof. The rotating plate 54 lies preferably in a horizontal plane and is rotatable by a motor 56 in order to move the alveoli 19 along the orienting path 20.

In accordance with embodiments, the friction surface 23 can be formed by:
- a brush,
- a rubber or foamed rubber insert,
- a belt 57 having a surface made of a high-friction material, e.g., rubber, foamed rubber,
and forming an engaging length extending along a rotation length 58 of the orienting path 20 and suitable to engage and rotate the objects 2 held in the alveoli 19.

Advantageously, the friction surface 23 is mobile at a controlled speed (by the control unit 49 or a dedicated control unit) along the rotation length 58 of the orienting path 20 so as to control the rotation rate of the objects 2 about their reference axis 24 independently from the moving speed of the alveoli 19 along the orienting path 20. Particularly, the friction surface 23 is mobile in a direction opposite the movement direction of the alveoli 19, so as to increase the rotation angle of the objects 2 while keeping the length of the rotation length 58 of the orienting path 20 constant.

This further increases the orientation speed, while keeping the device dimension and the moving rate of the same objects constant.

Alternatively, the friction surface 23 can be mobile in the movement direction of the alveoli 19, so as to decrease the rotation rate of the objects 2 while keeping the constant moving rate of the alveoli 19, for example preventing undesired relative slidings between the friction surface 23 and the object 2.

The controlled handling of the friction surface 23 is carried out by means of special actuation means, for example, an electric motor 59 connected to the belt 57 or as series of rotary brushes. In a further embodiment, the belt 57 itself is provided with bristles to create a brush-like friction surface 23.

A discharge channel 60 can be connected to the release point 22 of the orienting path 20, which is suitable to receive and convey the objects 2 to successive working station, while maintaining the first and second orientations thereof.

## Claims

1. A device (1) for orienting objects (2), comprising:
- a support surface (3) movable along at least one length of a selection path (4) and suitable to receive the objects (2) having a first orientation, wherein a reference side (5) of the object (2) faces in a predetermined reference direction (6),
- a feeder (7) to feed the objects (2) on the support surface (3) at a starting point (8) of the selection path (4),
- selection means (9, 10) configured to prevent the objects (2) with an orientation that is different from the first orientation from being received onto the support surface (3), or to eject the objects (2) with an orientation that is different from the first orientation from the selection path (4), so as to obtain, at an output point (11) of the selection path (4), a sequence only of objects (2) having said first orientation,
- a build-up channel (13) having an input opening (14) connected to the output point (11) of the selection path (4), an output opening (15), and a guide surface system (16) extending from the input opening (14) up to the output opening (15), so as to receive the objects (2) with the first orientation in the input opening (14) and to guide the received objects (2) in a single row and having all the same first orientation from the input opening (14) to the output opening (15),
- conveyor means (17) conveying each single object (2) in the build-up channel (13) towards the output opening (15) so as to form at the output opening (15) a single row of objects (2) brought close to each other and all having the same first orientation,
- a sequence of alveoli (19) movable along a orienting path (20) extending from a receiving point (21) connected to the output opening (15) of the build-up channel (13) up to a release point (22), so that the build-up channel (13) feeds in each of the alveoli (19) a single object (2) with the first orientation and the alveoli (2) transport all the objects (2) received with the same first orientation from the receiving point (21) to the release point (22),
- a friction surface (23) projecting in the orienting path (20) so as to engage the objects (2) received in the alveoli (19) and, due to the relative movement between the alveoli (19) and the friction surface (23), rotate the objects (2) about a reference axis (24) thereof,
- an abutment surface (25) extending along an alignment length (26) of the orienting path (20) and forming an end-of-rotation abutment for the objects (2) that reached a second orientation, in which the object (2) is rotated about the reference axis (24) by a predetermined angle with respect to a second predetermined reference direction (27),
**characterized in that**, at the release point (22) all objects (2) have a same first orientation wherein a reference side (5) of the object (2) faces in a predetermined reference direction (6), and a same second orientation in which the object (2) is rotated about the reference axis (24) by a predetermined angle with respect to a second predetermined reference direction (27).

2. The device (1) according to claim 1, wherein the build-up channel (13) comprises a too empty detector (48) configured to generate and emit a too empty signal when the length of the row of objects (2) brought close to each other at the output opening (15) is less than a lower limit length, wherein an electronic control unit (49) of the device (1) is in signal connection with the too empty detector (48) and with an actuator (33, 38) of the support surface (3) and controls the moving rate of the support surface (3) as a function of the too empty signal.

3. The device (1) according to claim 2, wherein:
- the too empty detector (48) comprises an optical sensor configured to detect the passage of objects (2) in a first detection point (50) in the build-up channel (13) at a distance from the output opening (15) that is equal to the lower limit length,
- the control unit (49) is configured to determine, based on the frequency of the passages of detected objects, if the objects (2) are brought close to each other along the entire row between the first detection point (50) and the output opening (15).

4. The device (1) according to one of the claims 2 or 3, wherein:
- the build-up channel (13) comprises an overfill detector (51) configured to generate and emit an overfill signal when the length of the row of objects (2) brought close to each other at the output opening (15) is larger than an upper limit length,
- the control unit (49) is in signal connection with the overfill detector (51) and with the actuator (33, 38) of the support surface (3), and controls the moving rate of the support surface (3) as a function of the overfill signal.

5. The device (1) according to claim 4, wherein the overfill detector (51) comprises an optical sensor configured to detect the passage of objects (2) in a second detection point (52) in the build-up channel (13) at a distance from the output opening (15) that is equal to the upper limit length,
- the control unit (49) is configured to determine, based on the frequency of the passages of detected objects, if the objects (2) are brought close to each other along the entire row between the second detection point (52) and the output opening (15).

6. The device (1) according to any of the preceding claims, wherein the conveyor means (17) comprise one of:
- one or more air blowers arranged to direct one or more air jets into the build-up channel (13) in the direction of the output opening (15),
- one or more conveyor belts or conveying brushes forming a conveying surface in contact with the objects (2) and movable in the direction of the output opening (15),
- a gravitational conveyor formed by the system of guide surfaces (16) that are inclined so that the objects (2) fall due to the action of gravity towards the output opening (15).

7. The device (1) according to any of the preceding claims, wherein:
- the alveoli (19) are formed in a peripheral ring (53) extending along an outer circumference of a rotating plate (54),
- the rotating plate (54) is rotatable by a motor (56) in order to move the alveoli (19) along the orienting path (20),
- the friction surface (23) is mobile at a controlled speed along a rotation length (58) of the orienting path (20) so as to control
the rotation rate of the objects (2) about their reference axis (24) independently from the moving speed of the alveoli (19) along the orienting path (20).

8. The device (1) according to claim 7, wherein:
- the friction surface (23) is formed by a belt (57) that is actuated by an electric motor (59).

9. The device (1) according to one of the preceding claims, wherein:
- the support surface (3) is formed in a support ring (29) extending along an outer circumference of a rotating plate (30),
- a side wall (31) extends circumferentially along a prevailing part of the selection path (4) so as to define, together with the rotating plate (30), a collection space (32) to collect the bulk objects (2) to be oriented,
- the rotating plate (30) is inclined and rotatable by a motor (33) in order to feed the objects (2) from the collection space (32) onto the support surface (3) and to move the support surface (3) along the selection path (4).

10. The device (1) according to one of the claims 1 to 8, wherein:
- the support surface (3) is formed in a support ring (34) of an outer rotating housing (35), said support ring (34) extending along an outer circumference of an inner rotating plate (36),
- the support ring (34) of the outer rotating housing (35) forms a radially inner surface (37) defining, together with the inner rotating plate (36), a collection space (32) to collect the bulk objects (2) to be oriented,
- the inner rotating plate (36) is inclined and rotatable by a first motor (33) to feed the objects (2) from the collection space (32) onto the support surface (3) of the support ring (34),
- the outer rotating housing (35) is rotatable by a second motor (38) to move the support surface (3) along the selection path (4).

11. The device (1) according to one of the claims 1 to 8, wherein:
- the support surface (3) is formed in a support ring (29) extending along an outer circumference of a rotating plate (30),
- a side wall (31) extends circumferentially along a prevailing part of the selection path (4) and defines, together with the rotating plate (30), a collection space (32) to collect the bulk objects (2) to be oriented,
- the rotating plate (30) lies in a substantially horizontal plane, and is rotatable by a motor (33) so as to feed the objects (2) from the collection space (32) by means of the centrifugal force onto the support surface (3), and to move the support surface (3) along the selection path (4).

12. The device (1) according to one of the claims 1 to 8, wherein:
- the support surface (3) is formed by a conveyor belt (43) with a plurality of shovels (44) arranged transversal to a longitudinal extension of the conveyor belt (43),
- the conveyor belt (43) is located to receive the bulk objects (2) from a hopper (45), and forms an ascending length (46) suitable to select the objects (2) having the first orientation, so that, at the end of the ascending length (46), only the objects (2) having the first orientation are present on the conveyor belt (43).

13. The device (1) according to one of the preceding claims, wherein the selection means (9, 10) comprise at least one of:
- a sequence of selection seats (9) formed in the support surface (3) and each being so shaped as to receive only one of the objects (2) with the first orientation, and to prevent the objects (2) with an orientation that is different from the first orientation from being received,
- a shaving surface (39) opposite the support surface (3),
- a continuous channel that is formed by the support surface (3), a side wall (31), and a shaving surface (39) opposite the support surface (3), said continuous channel being so shaped as to receive only the objects (2) with the first orientation, and to prevent the objects (2) with an orientation that is different from the first orientation from being received,
- a pneumatic ejector (10) directing an air jet to the selection path in order to eject from the selection path (4) the objects (2) with an orientation that is different from the first orientation,
- a discontinuous support system (42) that is configured to unbalance and remove from the selection path (4) the objects (2) with an orientation that is different from the first orientation.

14. A method for orienting objects (2), comprising the steps of:
- moving a support surface (3) along at least one length of a selection path (4),
- feeding the objects (2) onto the support surface (3) at a starting point (8) of the selection path (4),
- ejecting the objects (2) with an orientation that is different from a first orientation from the selection path (4), in which a reference side (5) of the object (2) faces a predetermined reference direction (6), so as to obtain, at an output point (11) of the selection path (4), a sequence only of objects (2) having said first orientation,
- receiving the objects (2) with the first orientation at the output point (11) of the selection path (4) and bring the objects (2) mutually close, so as to form a single row of objects (2) brought mutually close and all having the same first orientation,
- moving a sequence of alveoli (19) along an orienting path (20) extending from a receiving point (21) up to a release point (22),
- feeding the single row of mutually approximated objects (2) to the receiving point (21) so that each of the alveoli (19) receives a single object (2) with the first orientation and the alveoli (2) transport all the objects (2) received with the same first orientation from the receiving point (21) to the release point (22),
- extending a friction surface (23) in the orientation path (20) so that the friction surface (23) engages the objects (2) received within the alveoli (19) and rotates the objects (2) about a reference axis (24) thereof due to the relative movement between the alveoli (19) and the friction surface (23),
- locking the rotation of the objects (2) that reached a second orientation, in which the object (2) is rotated about the reference axis (24) by a predetermined angle with respect to a second predetermined reference direction (27)
**characterized in that**, at the release point (22) all objects (2) have a same first orientation wherein a reference side (5) of the object (2) faces in a predetermined reference direction (6), and a same second orientation in which the object (2) is rotated about the reference axis (24) by a predetermined angle with respect to a second predetermined reference direction (27).

15. The method according to claim 14, comprising the step of:
- moving the friction surface to the opposite direction with respect to the movement of the alveoli.

## Patentansprüche

1. Vorrichtung (1) zum Orientieren von Objekten (2), umfassend:
- eine Trägerfläche (3), welche entlang wenigstens einer Länge eines Auswahlpfades (4) bewegbar ist und dazu geeignet ist, die Objekte (2) mit einer ersten Orientierung aufzunehmen, wobei eine Referenzseite (5) des Objekts (2) in eine vorbestimmte Referenzrichtung (6) weist,
- eine Einspeisungseinheit (7) zum Einspeisen der Objekte (2) an der Trägerfläche (3) an einem Startpunkt (8) des Auswahlpfades (4),
- Auswahlmittel (9, 10), welche dazu eingerichtet sind, die Objekte (2) mit einer Orientierung, welche von der ersten Orientierung verschieden ist, davon abzuhalten, an der Trägerfläche (3) aufgenommen zu werden, oder die Objekte (2) mit einer Orientierung, welche von der ersten Orientierung verschieden ist, von dem Auswahlpfad (4) auszugeben, um an einem Ausgabepunkt (11) des Auswahlpfades (4) eine Abfolge nur von Objekten (2) mit der ersten Orientierung zu erhalten,
- einen Aufbaukanal (13) mit einer Eingabeöffnung (14), welche mit dem Ausgabepunkt (11) des Auswahlpfades (4) verbunden ist, einer Ausgabeöffnung (15) und einem Führungsflächensystem (16), welches sich von der Eingangsöffnung (14) bis zu der Ausgabeöffnung (15) erstreckt, um die Objekte (2) mit der ersten Orientierung in der Eingabeöffnung (14) aufzunehmen und die aufgenommenen Objekte (2) in einer einzelnen Reihe und alle mit der gleichen ersten Orientierung von der Eingabeöffnung (14) zu der Ausgabeöffnung (15) zu führen,
- Fördermittel (17), welche jedes einzelne Objekt (2) in dem Aufbaukanal (13) in Richtung der Ausgabeöffnung (15) befördern, um an der Ausgabeöffnung (15) eine einzelne Reihe von Objekten (2) zu bilden, welche nahe zueinander gebracht worden sind und alle die gleiche erste Orientierung aufweisen,
eine Abfolge von Hohlräumen (19), welche entlang eines Orientierungspfades (20) bewegbar sind, welcher sich von einem Aufnahmepunkt (21), welcher mit der Ausgabeöffnung (15) des Aufbaukanals (13) verbunden ist, bis zu einem Freigabepunkt (22) erstreckt, so dass der Aufbaukanal (13) in jeden der Hohlräume (19) ein einzelnes Objekt (2) mit der ersten Orientierung einspeist und die Hohlräume (2) all die Objekte (2), welche mit der gleichen ersten Orientierung aufgenommen sind, von dem Aufnahmepunkt (21) zu dem Freigabepunkt (22) transportieren,
- eine Reibungsfläche (23), welche in dem Orientierungspfad (20) vorsteht, um mit den Objekten (2), welche in den Hohlräumen (19) aufgenommen sind, einzugreifen und, auf Grund der Relativbewegung zwischen den Hohlräumen (19) und der Reibungsfläche (23), die Objekte (2) um eine Referenzachse (24) davon zu rotieren,
- eine Anlagefläche (25), welche sich entlang einer Ausrichtungslänge (26) des Orientierungspfades (20) erstreckt und eine End-Rotations-Anlage für die Objekte (2) bildet, welche eine zweite Orientierung erreicht haben, in welcher das Objekt (2) um die Referenzachse (24) um einen vorbestimmten Winkel in Bezug auf eine zweite vorbestimmte Referenzrichtung (27) rotiert worden ist,
**dadurch gekennzeichnet, dass** an dem Freigabepunkt (22) alle Objekte (2) eine gleiche erste Orientierung, wobei eine Referenzseite (5) des Objekts (2) in eine vorbestimmte Referenzrichtung (6) weist, und eine gleiche zweite Orientierung aufweisen, in welcher das Objekt (2) um die Referenzachse (24) um einen vorbestimmten Winkel in Bezug auf eine zweite vorbestimmte Referenzrichtung (27) rotiert ist.

2. Vorrichtung (1) nach Anspruch 1, wobei der Aufbaukanal (13) eine Zu-Leer-Erfassungseinheit (48) umfasst, welche dazu eingerichtet ist, ein Zu-Leer-Signal zu erzeugen und auszusenden, wenn die Länge der Reihe von Objekten (2), welche nahe aneinander gebracht worden sind, an der Ausgabeöffnung (15) geringer ist als eine untere Grenzlänge, wobei eine elektronische Regel-/Steuereinheit (49) der Vorrichtung (1) mit der Zu-Leer-Erfassungseinheit (48) und mit einem Aktuator (33, 38) der Trägerfläche (3) in Signalverbindung steht und die Bewegungsrate der Trägerfläche (3) als eine Funktion des zu Zu-Leer-Signals regelt/steuert.

3. Vorrichtung (1) nach Anspruch 2, wobei:
- die Zu-Leer-Erfassungseinheit (48) einen optischen Sensor umfasst, welcher dazu eingerichtet ist, den Durchgang von Objekten (2) in einem ersten Erfassungspunkt (50) in dem Aufbaukanal (13) in einem Abstand von der Ausgabeöffnung (15), welcher gleich der unteren Grenzlänge ist, zu erfassen,
- die Regel-/Steuereinheit (49) dazu eingerichtet ist, auf Grundlage der Frequenz der Durchgänge von erfassten Objekten zu bestimmen, ob die Objekte (2) entlang der gesamten Reihe zwischen dem ersten Erfassungspunkt (50) und der Ausgabeöffnung (15) nahe aneinander gebracht worden sind.

4. Vorrichtung (1) nach einem der Ansprüche 2 oder 3, wobei:
- der Aufbaukanal (13) eine Überfüllungs-Erfassungseinheit (51) umfasst, welche dazu eingerichtet ist, ein Überfüllungs-Signal zu erzeugen und auszusenden, wenn die Länge der Reihe von Objekten (2), welche nahe aneinander gebracht worden sind, an der Ausgabeöffnung (15) größer ist als eine obere Grenzlänge,
- die Regel-/Steuereinheit (49) mit der Überfüllungs-Erfassungseinheit (51) und mit dem Aktuator (33, 38) der Trägerfläche (3) in Signalverbindung steht und die Bewegungsrate der Trägerfläche (3) als eine Funktion des Überfüllungs-Signals regelt/steuert.

5. Vorrichtung (1) nach Anspruch 4, wobei die Überfüllungs-Erfassungseinheit (51) einen optischen Sensor umfasst, welcher dazu eingerichtet ist, den Durchgang von Objekten (2) in einem zweiten Erfassungspunkt (52) in dem Aufbaukanal (13) in einem Abstand von der Ausgabeöffnung (15), welcher gleich der oberen Grenzlänge ist, zu erfassen,
- die Regel-/Steuereinheit (49) dazu eingerichtet ist, auf Grundlage der Frequenz der Durchgänge von erfassten Objekten zu bestimmen, ob die Objekte (2) entlang der gesamten Reihe zwischen dem zweiten Erfassungspunkt (52) und der Ausgabeöffnung (15) nahe aneinander gebracht worden sind.

6. Vorrichtung (1) nach einem der vorhergehenden Ansprüche, wobei die Fördermittel (17) eines umfassen aus:
- einem oder mehreren Luftgebläsen, welche dazu eingerichtet sind, einen oder mehrere Luftströme in den Aufbaukanal (13) in der Richtung der Ausgabeöffnung (15) zu richten,
- einem oder mehreren Förderbändern oder Förderbürsten, welche eine Förderfläche bilden, welche mit den Objekten (2) in Kontakt steht und in der Richtung der Ausgabeöffnung (15) bewegbar ist,
- eine Schwerkraft-Fördereinrichtung, welche durch das System von Führungsflächen (16) gebildet ist, welche geneigt sind, so dass die Objekte (2) auf Grund der Schwerkraftwirkung in Richtung der Ausgabeöffnung (15) fallen.

7. Vorrichtung (1) nach einem der vorhergehenden Ansprüche, wobei:
- die Hohlräume (19) in einem Umfangsring (53) gebildet sind, welcher sich entlang eines äußeren Umfangs einer rotierenden Platte (54) erstreckt,
- die rotierende Platte (54) durch einen Motor (46) rotierbar ist, um die Hohlräume (19) entlang des Orientierungspfades (20) zu bewegen,
- die Reibungsfläche (23) zu einer geregelten/gesteuerten Geschwindigkeit entlang einer Rotationslänge (58) des Orientierungspfades (20) bewegbar ist, um die Rotationsrate der Objekte (2) um ihre Referenzachse (24) unabhängig von der Bewegungsgeschwindigkeit der Hohlräume (19) entlang des Orientierungspfades (20) zu regeln/steuern.

8. Vorrichtung (1) nach Anspruch 7, wobei:
- die Reibungsfläche (23) durch einen Gurt (57) gebildet ist, welcher durch einen elektrischen Motor (59) betätigt ist.

9. Vorrichtung (1) nach einem der vorhergehenden Ansprüche, wobei:
- die Trägerfläche (3) in einem Trägerring (29) gebildet ist, welcher sich entlang eines äußeren Umfangs einer rotierenden Platte (30) erstreckt,
- sich eine Seitenwand (31) entlang eines überwiegenden Teils des Auswahlpfades (4) umlaufend erstreckt, um zusammen mit der rotierenden Platte (30) einen Sammelraum (32) zu definieren, um die zu orientierenden Massenobjekte (2) zu sammeln,
- die rotierende Platte (30) geneigt ist und durch einen Motor (33) rotierbar ist, um die Objekte (2) von dem Sammelraum (32) auf die Trägerfläche (3) einzuspeisen und die Trägerfläche (3) entlang des Auswahlpfades (4) zu bewegen.

10. Vorrichtung (1) nach einem der Ansprüche 1 bis 8, wobei:
- die Trägerfläche (3) in einem Trägerring (34) eines äußeren rotierenden Gehäuses (35) gebildet ist, wobei sich der Trägerring (34) entlang eines äußeren Umfangs einer inneren rotierenden Platte (36) erstreckt,
- der Trägerring (34) des äußeren rotierenden Gehäuses (35) eine radial innere Fläche (37) bildet, welche zusammen mit der inneren rotierenden Platte (36) einen Sammelraum (32) definiert, um die zu orientierenden Massenobjekte (2) zu sammeln,
- die innere rotierende Platte (36) geneigt ist und durch einen ersten Motor (33) rotierbar ist, um die Objekte (2) von dem Sammelraum (32) auf die Trägerfläche (3) des Trägerrings (34) einzuspeisen,
- das äußere rotierende Gehäuse (35) durch einen zweiten Motor (38) rotierbar ist, um die Trägerfläche (3) entlang des Auswahlpfades (4) zu bewegen.

11. Vorrichtung (1) nach einem der Ansprüche 1 bis 8, wobei:
- die Trägerfläche (3) in einem Trägerring (29) gebildet ist, welcher sich entlang eines äußeren Umfangs einer rotierenden Platte (30) erstreckt,
- sich eine Seitenwand (31) entlang eines überwiegenden Teils des Auswahlpfades (4) umlaufend erstreckt und zusammen mit der rotierenden Platte (30) einen Sammelraum (32) definiert, um die zu orientierenden Massenobjekte (2) zu sammeln,
- die rotierende Platte (30) in einer im Wesentlichen horizontalen Ebene liegt und durch einen Motor (33) rotierbar ist, um die Objekte (2) von dem Sammelraum (32) mittels der Zentrifugalkraft auf die Trägerfläche (3) einzuspeisen und die Trägerfläche (3) entlang des Auswahlpfades (4) zu bewegen.

12. Vorrichtung (1) nach einem der Ansprüche 1 bis 8, wobei:
- die Trägerfläche (3) durch ein Förderband (43) mit einer Mehrzahl von Schaufeln (44) gebildet ist, welche transversal zu einer Längserstreckung des Förderbands (43) angeordnet sind,
- das Förderband (43) positioniert ist, um die Massenobjekte (2) von einem Trichter (45) aufzunehmen, und eine aufsteigende Länge (46) bildet, welche dazu geeignet ist, die Objekte (2) mit der ersten Orientierung auszuwählen, so dass an dem Ende der aufsteigenden Länge (46) nur die Objekte (2) mit der ersten Orientierung auf dem Förderband (43) vorhanden sind.

13. Vorrichtung (1) nach einem der vorhergehenden Ansprüche, wobei die Auswahlmittel (9, 10) wenigstens eines umfassen aus:
- einer Abfolge von Auswahl-Sitzen (9), welche in der Trägerfläche (3) gebildet sind und jeweils so geformt sind, um nur eines der Objekte (2) mit der ersten Orientierung aufzunehmen, und um die Objekte (2) mit einer Orientierung, welche von der ersten Orientierung verschieden ist, daran zu hindern, aufgenommen zu werden,
- eine Schabefläche (39), welche der Trägerfläche (3) gegenüberliegend ist,
- einen durchgehenden Kanal, welcher durch die Trägerfläche (3), eine Seitenwand (31) und eine Schabefläche (39), welche der Trägerfläche (3) gegenüberliegend ist, gebildet ist, wobei der durchgehende Kanal so geformt ist, um nur die Objekte (2) mit der ersten Orientierung aufzunehmen und die Objekte (2) mit einer Orientierung, welche von der ersten Orientierung verschieden ist, davon abzuhalten, aufgenommen zu werden,
- eine pneumatische Auswurfeinheit (10), welche einen Luftstrom auf den Auswahlpfad richtet, um die Objekte (2) mit einer Orientierung, welche von der ersten Orientierung verschieden ist, von dem Auswahlpfad (4) auszuwerfen,
- ein unterbrochenes Trägersystem (42), welches dazu eingerichtet ist, die Objekte (2) mit einer Orientierung, welche von der ersten Orientierung verschieden ist, aus dem Gleichgewicht zu bringen und von dem Auswahlpfad (4) zu entfernen.

14. Verfahren zum Orientieren von Objekten (2), umfassend die Schritte:
- Bewegen einer Trägerfläche (3) entlang wenigstens einer Länge eines Auswahlpfades (4),
- Einspeisen der Objekte (2) auf die Trägerfläche (3) an einem Startpunkt (8) des Auswahlpfades (4),
- Auswerfen der Objekte (2) mit einer Orientierung, welche von einer ersten Orientierung verschieden ist, von dem Auswahlpfad (4), in welcher eine Referenzseite (5) des Objekts (2) in eine vorbestimmte Referenzrichtung (6) weist, um an einem Ausgabepunkt (11) des Auswahlpfades (4) eine Abfolge nur von Objekten (2) mit der ersten Orientierung zu erhalten,
- Aufnehmen der Objekte (2) mit der ersten Orientierung an dem Ausgabepunkt (11) des Auswahlpfades (4) und gegenseitiges Nahebringen der Objekte (2), um eine einzelne Reihe von Objekten (2), welche einander nahe gebracht sind und alle die gleiche erste Orientierung aufweisen, zu bilden,
- Bewegen einer Abfolge von Hohlräumen (19) entlang eines Orientierungspfades (20), welcher sich von einem Aufnahmepunkt (21) bis zu einem Freigabepunkt (22) erstreckt,
- Einspeisen der einzelnen Reihe von einander angenäherten Objekten (2) an dem Aufnahmepunkt (21), so dass jeder der Hohlräume (19) ein einzelnes Objekt (2) mit der ersten Orientierung aufnimmt und die Hohlräume (2) all die Objekte (2), welche in der gleichen ersten Orientierung aufgenommen sind, von dem Aufnahmepunkt (21) zu dem Freigabepunkt (22) transportieren,
- Erweitern einer Reibungsfläche (23) in dem Orientierungspfad (20), so dass die Reibungsfläche (23) mit den Objekten (2), welche in den Hohlräumen (19) aufgenommen sind, eingreift und die Objekte (2) um eine Referenzachse (24) davon auf Grund der Relativbewegung zwischen den Hohlräumen (19) und der Reibungsfläche (23) rotiert,
- Sperren der Rotation der Objekte (2), welche eine zweite Orientierung erreicht haben, in welcher das Objekt (2) um die Referenzachse (24) um einen vorbestimmten Winkel in Bezug auf eine zweite vorbestimmte Referenzrichtung (27) rotiert ist,
**dadurch gekennzeichnet, dass** an dem Freigabepunkt (22) alle Objekte (2) eine gleiche erste Orientierung,
wobei eine Referenzseite (5) des Objekts (2) in eine vorbestimmte Referenzrichtung (6) weist und eine gleiche zweite Orientierung aufweisen, in welcher das Objekt (2) um die Referenzachse (24) um einen vorbestimmten Winkel in Bezug auf eine zweite vorbestimmte Referenzrichtung (27) rotiert ist.

15. Verfahren nach Anspruch 14, umfassend den Schritt:
- Bewegen der Reibungsfläche zu der Gegenrichtung in Bezug auf die Bewegung der Hohlräume.

## Revendications

1. Dispositif (1) pour orienter des objets (2), comprenant :
- une surface de support (3) capable de se déplacer sur au moins une longueur d'un trajet de sélection (4) et pouvant recevoir les objets (2) disposés selon une première orientation, dans laquelle un côté de référence (5) de l'objet (2) est tourné dans une direction de référence (6) prédéterminée,
- une arrivée (7) amenant les objets (2) sur la surface de support (3) en un point de départ (8) du trajet de sélection (4),
- des moyens de sélection (9, 10) configurés pour empêcher les objets (2) dont l'orientation est différente de la première orientation de parvenir sur la surface de support (3) ou pour éjecter du trajet de sélection (4) les objets (2) dont l'orientation est différente de la première orientation, de façon à obtenir, en un point de sortie (11) du trajet de sélection (4), une séquence exclusivement composée d'objets (2) disposés selon ladite première orientation,
- un canal de formation (13) ayant une ouverture d'entrée (14) reliée au point de sortie (11) du trajet de sélection (4), une ouverture de sortie (15) et un système de surfaces de guidage (16) qui s'étend de l'ouverture d'entrée (14) à l'ouverture de sortie (15) de façon à recevoir les objets (2) disposés selon la première orientation dans l'ouverture d'entrée (14) et de guider les objets (2) reçus en une seule rangée et tous selon la même première orientation de l'ouverture d'entrée (14) à l'ouverture de sortie (15),
- des moyens convoyeurs (17) acheminant chaque objet (2) dans le canal de formation (13) vers l'ouverture de sortie (15) afin de former au niveau de l'ouverture de sortie (15) une seule rangée d'objets (2) rapprochés les uns des autres et disposés selon la même première orientation,
- une succession d'alvéoles (19) capables de se déplacer le long d'un trajet d'orientation (20) qui s'étend d'un point de réception (21) relié à l'ouverture de sortie (15) du canal de formation (13) à un point de libération (22), de telle sorte que le canal de formation (13) dépose dans chacun des alvéoles (19) un seul objet (2) disposé selon la première orientation et les alvéoles (2) transportent tous les objets (2) reçus selon la même première orientation du point de réception (21) au point de libération (22),
- une surface de frottement (23) qui dépasse dans le trajet d'orientation (20) de façon à s'engager avec les objets (2) reçus dans les alvéoles (19) et, du fait du mouvement relatif entre les alvéoles (19) et la surface de frottement (23), à faire tourner les objets (2) autour de leur axe de référence (24),
- une surface de butée (25) qui s'étend le long d'une longueur d'alignement (26) du trajet d'orientation (20) et forme une butée de fin de rotation pour les objets (2) qui ont atteint une deuxième orientation, dans laquelle l'objet (2) est tourné autour de l'axe de référence (24) d'un angle prédéterminé par rapport à une deuxième direction de référence prédéterminée (27),
**caractérisé en ce qu'**au point de libération (22), tous les objets (2) sont disposés selon une même première orientation, dans laquelle un côté de référence (5) de l'objet (2) est tourné dans une direction de référence prédéterminée (6), et une même deuxième orientation dans laquelle l'objet (2) est tourné autour de l'axe de référence (24) d'un angle prédéterminé par rapport à une deuxième direction de référence prédéterminée (27).

2. Dispositif (1) selon la revendication 1, dans lequel le canal de formation (13) comprend un détecteur de « trop vide » (48) configuré pour produire et émettre un signal de « trop vide » lorsque la longueur de la rangée d'objets (2) rapprochés les uns des autres au niveau de l'ouverture de sortie (15) est inférieure à une limite de longueur inférieure, une unité de commande électronique (49) du dispositif (1) étant en liaison de signaux avec le détecteur de « trop vide » (48) et avec un actionneur (33, 38) de la surface de support (3) et commandant la vitesse de mouvement de la surface de support (3) en fonction du signal de « trop vide ».

3. Dispositif (1) selon la revendication 2, dans lequel :
- le détecteur de « trop vide » (48) comprend un capteur optique configuré pour détecter le passage d'objets (2) en un premier point de détection (50) dans le canal de formation (13) à une distance de l'ouverture de sortie (15) égale à la limite de longueur inférieure,
- l'unité de commande (49) est configurée de façon à déterminer, sur la base de la fréquence de passage des objets détectés, si les objets (2) sont rapprochés les uns des autres dans toute la rangée entre le premier point de détection (50) et l'ouverture de sortie (15).

4. Dispositif (1) selon l'une des revendications 2 ou 3, dans lequel :
- le canal de formation (13) comprend un détecteur de trop-plein (51) configuré pour produire et émettre un signal de trop-plein lorsque la longueur de la rangée d'objets (2) rapprochés les uns des autres au niveau de l'ouverture de sortie (15) dépasse une limite de longueur supérieure,
- l'unité de commande (49) est en liaison de signal avec le détecteur de trop-plein (51) et avec l'actionneur (33, 38) de la surface de support (3) et commande la vitesse de mouvement de la surface de support (3) en fonction du signal de trop-plein.

5. Dispositif (1) selon la revendication 4, dans lequel
- le détecteur de trop-plein (51) comprend un capteur optique configuré pour détecter le passage d'objets (2) en un deuxième point de détection (52) dans le canal de formation (13) à une distance de l'ouverture de sortie (15) égale à la limite de longueur supérieure,
- l'unité de commande (49) est configurée de façon à déterminer, sur la base de la fréquence de passage des objets détectés, si les objets (2) sont rapprochés les uns des autres sur toute la rangée entre le deuxième point de détection (52) et l'ouverture de sortie (15).

6. Dispositif (1) selon l'une quelconque des revendications précédentes, dans lequel les moyens convoyeurs (17) comprennent soit :
- une ou plusieurs soufflantes disposées pour diriger un ou plusieurs jets d'air dans le canal de formation (13) en direction de l'ouverture de sortie (15), soit
- une ou plusieurs courroies ou brosses de transport formant une surface de transport en contact avec les objets (2) et capables de se déplacer en direction de l'ouverture de sortie (15), soit
- un convoyeur par gravité formé par le système de surfaces de guidage (16) qui sont inclinées de telle sorte que les objets (2) tombent sous l'action de la gravité vers l'ouverture de sortie (15).

7. Dispositif (1) selon l'une quelconque des revendications précédentes, dans lequel :
- les alvéoles (19) sont formés dans un anneau périphérique (53) qui s'étend le long d'une circonférence extérieure d'une plaque rotative (54),
- la plaque rotative (54) peut être entraînée en rotation par un moteur (56) afin de déplacer les alvéoles (19) le long du trajet d'orientation (20),
- la surface de frottement (23) est mobile à une vitesse contrôlée le long d'une longueur de rotation (58) du trajet d'orientation (20), de façon à contrôler la vitesse de rotation des objets (2) autour de leur axe de référence (24) indépendamment de la vitesse de mouvement des alvéoles (19) le long du trajet d'orientation (20).

8. Dispositif (1) selon la revendication 7, dans lequel la surface de frottement (23) est formée par une courroie (57) actionnée par un moteur électrique (59).

9. Dispositif (1) selon l'une des revendications précédentes, dans lequel
- la surface de support (3) est formée dans une bague de support (29) qui s'étend le long d'une circonférence extérieure d'une plaque rotative (30),
- une paroi latérale (31) s'étend dans le sens de la circonférence le long de la majeure partie du trajet de sélection (4) afin de définir, avec la plaque rotative (30), un espace de regroupement (32) pour regrouper les objets (2) en vrac à orienter,
- la plaque rotative (30) est inclinée et peut être entraînée en rotation par un moteur (33) afin d'amener les objets (2) de l'espace de regroupement (32) à la surface de support (3) et de déplacer la surface de support (3) le long du trajet de sélection (4).

10. Dispositif (1) selon l'une des revendications 1 à 8, dans lequel
- la surface de support (3) est formée dans une bague de support (34) d'un boîtier rotatif extérieur (35), laquelle bague de support (34) s'étend le long d'une circonférence extérieure d'une plaque rotative intérieure (36),
- la bague de support (34) du boîtier rotatif extérieur (35) forme une surface intérieure dans le sens radial (37) qui définit, avec la plaque rotative intérieure (36), un espace de regroupement (32) pour regrouper les objets (2) en vrac à orienter,
- la plaque rotative intérieure (36) est inclinée et peut être entraînée en rotation par un premier moteur (33) afin d'amener les objets (2) de l'espace de regroupement (32) à la surface de support (3) de la bague de support (34),
- le boîtier rotatif extérieur (35) peut être entraîné en rotation par un deuxième moteur (38) afin de déplacer la surface de support (3) le long du trajet de sélection (4).

11. Dispositif (1) selon l'une des revendications 1 à 8, dans lequel
- la surface de support (3) est formée dans une bague de support (29) qui s'étend le long d'une circonférence extérieure d'une plaque rotative (30),
- une paroi latérale (31) s'étend dans le sens de la circonférence le long de la majeure partie du trajet de sélection (4) et définit, avec la plaque rotative (30), un espace de regroupement (32) pour regrouper les objets (2) en vrac à orienter,
- la plaque rotative (30) se trouve dans un plan sensiblement horizontal et peut être entraînée en rotation par un moteur (33) de façon à amener les objets (2) de l'espace de regroupement (32) à la surface de support (3) au moyen de la force centrifuge et à déplacer la surface de support (3) le long du trajet de sélection (4).

12. Dispositif (1) selon l'une des revendications 1 à 8, dans lequel
- la surface de support (3) est formée par une courroie de transport (43) avec plusieurs godets (44) disposés transversalement par rapport à une étendue longitudinale de la courroie de transport (43),
- la courroie de transport (43) est placée de façon à recevoir les objets (2) en vrac depuis une trémie (45) et forme une longueur ascendante (46) permettant de sélectionner les objets (2) disposés selon la première orientation, de telle sorte qu'à la fin de la longueur ascendante (46), seuls les objets (2) disposés selon la première orientation soient présents sur la courroie de transport (43).

13. Dispositif (1) selon l'une des revendications précédentes, dans lequel les moyens de sélection (9, 10) comprennent au moins :
- soit une séquence d'emplacements de sélection (9) formés dans la surface de support (3) et conformés chacun de façon à recevoir un seul des objets (2) disposé selon la première orientation et à empêcher les objets (2) dont l'orientation est différente de la première orientation d'être reçus,
- soit une surface d'arasement (39) opposée à la surface de support (3),
- soit un canal continu formé par la surface de support (3), une paroi latérale (31) et une surface d'arasement (39) opposée à la surface de support (3), lequel canal continu est conformé de façon à ne recevoir que les objets (2) disposés selon la première orientation et à empêcher les objets (2) dont l'orientation est différente de la première orientation d'être reçus,
- soit un éjecteur pneumatique (10) qui dirige un jet d'air vers le trajet de sélection afin d'éjecter du trajet de sélection (4) les objets (2) dont l'orientation est différente de la première orientation,
- soit un système de support discontinu (42) configuré pour déséquilibrer et enlever du trajet de sélection (4) les objets (2) dont l'orientation est différente de la première orientation.

14. Procédé pour orienter des objets (2), comprenant les étapes suivantes :
- déplacement d'une surface de support (3) sur au moins une longueur d'un trajet de sélection (4),
- acheminement des objets (2) sur la surface de support (3) en un point de départ (8) du trajet de sélection (4),
- éjection des objets (2) dont l'orientation est différente d'une première orientation du trajet de sélection (4), un côté de référence (5) de l'objet (2) faisant face à une direction de référence prédéterminée (6), de façon à obtenir, en un point de sortie (11) du trajet de sélection (4), une séquence composée uniquement d'objets (2) disposés selon ladite première orientation,
- réception des objets (2) disposés selon la première orientation au point de sortie (11) du trajet de sélection (4) et rapprochement des objets (2) entre eux, de façon à former une rangée unique d'objets (2) rapprochés les uns des autres et tous disposés selon la même première orientation,
- déplacement d'une séquence d'alvéoles (19) le long d'un trajet d'orientation (20) qui s'étend d'un point de réception (21) à un point de libération (22),
- acheminement de la rangée unique d'objets (2) rapprochés les uns des autres vers le point de réception (21) de telle manière que chacun des alvéoles (19) reçoive un seul objet (2) disposé selon la première orientation et que les alvéoles (19) transportent tous les objets (2) reçus disposés selon la même première orientation du point de réception (21) au point de libération (22),
- déploiement d'une surface de frottement (23) dans le trajet d'orientation (20) de telle façon que la surface de frottement (23) s'engage avec les objets (2) reçus dans les alvéoles (19) et fasse tourner les objets (2) autour de leur axe de référence (24) du fait du mouvement relatif entre les alvéoles (19) et la surface de frottement (23),
- blocage de la rotation des objets (2) ayant atteint une deuxième orientation dans laquelle l'objet (2) est tourné autour de l'axe de référence (24) d'un angle prédéterminé par rapport à une deuxième direction de référence prédéterminée (27),
**caractérisé en ce que** tous les objets (2) sont disposés selon une même première orientation au point de libération (22), un côté de référence (5) de l'objet (2) étant tourné dans une direction de référence prédéterminée (6), et une même deuxième orientation dans laquelle l'objet (2) est tourné autour de l'axe de référence (24) d'un angle prédéterminé par rapport à une deuxième direction de référence prédéterminée (27).

15. Procédé selon la revendication 14, comprenant l'étape de déplacement de la surface de frottement en sens inverse du mouvement des alvéoles.
